# EUROPÄISCHE PATENTSCHRIFT

(11) **EP 0 915 282 B1**
(45) Veröffentlichungstag und Bekanntmachung des Hinweises auf die Patenterteilung: **29.05.2002**
(21) Anmeldenummer: 98121026.3
(22) Anmeldetag: 05.11.1998
(51) Int. Cl.: F16L 25/00, F16L 23/036, F16L 23/10

(54) **Anschlussverbindung für ringgewellte Schlauchleitungen**
Joint for corrugated hoses
Raccord pour tuyaux ondulés

(30) Priorität: 07.11.1997 DE 19749251
(43) Veröffentlichungstag der Anmeldung: 12.05.1999
(73) Patentinhaber: Witzenmann GmbH, 75175 Pforzheim (DE)
(72) Erfinder: Berger, Peter W., 75181 Pforzheim-Eutingen (DE)
(74) Vertreter: Blumenröhr, Dietrich

(56) Entgegenhaltungen:
- EP-A- 0 557 594
- DE-A- 4 105 782
- DE-U- 8 533 984
- FR-A- 2 672 373
- US-A- 2 769 648
- US-A- 3 180 662

## Beschreibung

Die Erfindung betrifft eine Anschlußverbindung für ringgewellte Schlauchleitungen mit einem in einem endständigen Bereich der Schlauchleitung angeordneten Dichtring und einem. diese Schlauchleitung im Bereich des Dichtringes zumindest mittelbar umgreifenden und diese zumindest mittelbar gegen ein Anschlußelement festlegenden Befestigungselement, wobei das Anschlußelement im allgemeinen aus einer gegebenenfalls mit einem Flansch versehenen und insbesondere rohrförmigen Anschlußleitung besteht.

Meist weisen solche Anschlußverbindungen siehe beispeilsweise DE-U-8533984 als Befestigungselement eine durch Schrauben verspannbare Schelle auf, die zusammen mit der Schlauchleitung auf die Anschlußleitung unter Zwischenfügung des Dichtrings aufgesteckt wird und so die Schlauchleitung gegen die Anschlußleitung festlegt. In der Regel ist hierzu die Anschlußleitung mit einem Flansch versehen, der eine an die Schelleninnenform angepaßten Außenform aufweist und auf den zunächst der Dichtring und dann das Ende der Schlauchleitung aufgesteckt wird, so daß beim Betätigen der Schrauben der Schelle die Schlauchleitung zwischen Anschlußflansch und Schelle festgelegt wird.

Der Nachteil derartiger schraubbarer Befestigungsschellen besteht jedoch in der großen Radialerstreckung, so daß dieses Prinzip einer Anschlußverbindung beispielsweise dann nicht angewendet werden kann, wenn ein sehr eingeschränkter Bauraum zur Verfügung steht und die Schlauch- und Anschlußleitungen beispielsweise von einem Mantelrohr umgeben werden.

Eine weitere bekannte Bauform für eine Anschlußverbindung besteht darin, daß die Anschlußleitung einen die Schlauchleitung übergreifenden Flansch aufweist, so daß zur gegenseitigen Festlegung ein Dichtring in eine Wellung des Schlauches gesteckt, der Schlauch zusammen mit dem Dichtring in die Anschlußleitung eingeschoben und die die Schlauchleitung umgebenden Bereiche des Anschlußflansches nach innen gebogen werden, wo sie in eine Wellung der Schlauchleitung eingreifen. Hierzu sind diese Bereiche des Anschlußflansches als Haltezungen ausgebildet. Der Nachteil dieser Variante liegt jedoch in dem erwähnten einfachen Einsetzen und Ineinanderstecken. Hierbei wird zwischen Befestigungselement und Dichtring eine nur linienförmige radiale Anlage über den Umfang der Anschtußverbindung geschaffen, jedoch eine befriedigende Dichtwirkung läßt sich wegen fehlender auf den Dichtring wirkender Anpreßkräfte nicht erzielen.

Hiervon ausgehend liegt der vorliegenden Erfindung die Aufgabe zugrunde, eine Anschlußverbindung für ringgewellte Schlauchleitungen zur Verfügung zu stellen, die sich durch reduzierten Bauraum und gleichzeitig eine verbesserte Dichtwirkung auszeichnet.

Diese Aufgabe wird erfindungsgemäß dadurch gelöst, daß die zumindest letzte Welle der Schlauchleitung derart elastisch verformt ist, daß sie eine glatte Dichtfläche bildet und unter eigener Vorspannung am Dichtring anliegt, daß das Befestigungselement als einstückige und geschlossene ringförmige Schelle ausgebildet ist, und daß die Schelle mit zumindest einem umlaufenden Randbereich versehen ist, der zur und somi auch während der Herstellung der Anschlußverbindung in Radialrichtung nach innen biegbar ist.

Hierdurch ergibt sich zum einen der Vorteil, daß aufgrund der Vorspannung nicht nur die Dichtwirkung im Bereich zwischen Dichtring und Schlauchleitung, sondern darüber hinaus auch noch auf der Rückseite des Dichtringes, also auf der der Schlauchleitung abgewandten Seite erhöht wird, da die verformte Welle den Dichtring sicher in den zugehörigen Dichtungssitz drückt. Zweckmäßigerweise ist die Verformung der letzten Welle derart ausgebildet, daß die Vorspannung nicht nur eine Axial-, sondern auch eine Radialkomponente aufweist und der Dichtring hierdurch noch besser fixiert wird.

Zum anderen schlägt die vorliegende Erfindung vorteilhafterweise ein Befestigungsmittel in Form einer Schelle vor, die mit äußerst geringer Radialerstreckung auskommt, indem auf Schrauben oder sonstige Zustellelemente verzichtet wird. Statt dessen erfolgt bei der erfindungsgemäßen Schelle die Festlegung der einzelnen an der Anschlußverbindung beteiligten Bereiche durch einfaches Umlegen zumindest eines, bevorzugterweise aber beider Randbereiche der Schelle, so daß diese Randbereiche ausgehend von einer anfänglichen, das gegenseitige Positionieren der Einzelbauteile ermöglichenden zylindrischen Axialerstreckung in eine radial bzw. schräg nach innen verlaufende Erstreckung umgebogen werden und dort in jeweils eines der Anschlußverbindungsteile formschlüssig eingreifen.

Wesentlich ist in diesem Zusammenhang, daß sich der Außendurchmesser der als separates Bauteil ausgebildeten Schelle während des geamten Montagevorganges nicht ändert. Nur hierdurch wird sichergestellt, daß nach Herstellung der Anschlußverbindung die Schelle eine minimale Umfangserstreckung aufweist und mit stark reduziertem Bauraum auskommt. Durch diesen sehr einfachen Aufbau der Schelle läßt sich somit der Platzbedarf der Anschlußverbindung stark reduzieren, so daß im Extremfall der Bereich der Anschlußverbindung einen nur unwesentlich größeren Durchmesser aufweist als die hieran angeschlossenen Teile wie etwa die Schlauchleitung. Hierdurch läßt sich die erfindungsgemäße Anschlußverbindung problemlos auch in Mantelrohren unterbringen, wobei sich als weiterer wesentlicher Vorteil ergibt, daß hierbei eine etwaige die Anschlußverbindung umgebende Wärmedämmung aufrechterhalten und unbeeinträchtigt bleiben kann, während im Gegensatz dazu die radialen Vorsprünge der herkömmlichen Befestigungselementen eine solche Wärmedämmung durchdringen und stören.

Gemäß der vorliegenden Erfindung wird außerdem vorgeschlagen, daß die Schelle die Schlauchleitung und/oder die Anschlußleitung entlang zumindest größter Teile des Umfanges gleichmäßig beaufschlagt. Beispielsweise kann die Schelle U- bzw. V-förmig ausgebildet sein, wobei zumindest einer, insbesondere aber beide von den U- bzw. V-Schenkeln gebildeten Randbereiche von einer anfänglichen, die Montage ermöglichenden ungefähr achsparallelen Erstreckung derart nach innen gebogen werden, daß der eine Randbereich beispielsweise in ein endständiges Wellental der Schlauchleitung eingreift und der andere Randbereich einen endständigen Bord der Anschlußleitung hintergreift und hierdurch die Schelle beide Leitungen formschlüssig umgreift und gegeneinander festlegt.

Hierzu kann zumindest ein Randbereich mit einer Profilierung oder mit Aussparungen versehen und über die Profilierung bzw. die von den Aussparungen belassenen Haltezungen zumindest in Teilbereichen derart radial nach innen in Richtung der Mittelachse biegbar sein, daß diese Teilbereiche des Randbereiches eine Welle der Schlauchleitung bzw. einen Bord der Anschlußleitung hintergreifen.

Zur Ausgestaltung der U- bzw. V-förmigen Schelle kann es darüber hinaus zweckmäßig sein, wenn die Schelle einseitig, also im Bereich eines Randbereiches vorgeformt ist und im Bereich der Verbindungsstelle auf die Anschlußleitung geschoben und anschließend der zweite Randbereich nach innen umgebogen wird, bis er die letzte Schlauchwellung hintergreift.

Die vorstehend erwähnten Schellen bieten den Vorteil sehr geringen Bauraums bzw. Platzbedarfs in Radialrichtung und weisen somit deutliche Unterschiede gegenüber den bekannten Schellen auf, die sich insbesondere dann auswirken, wenn - wie bei Verbundleitungen - für die Befestigungsmittel nur sehr wenig Platz zur Verfügung steht, beispielsweise da die zu verbindenden Leitungen zusammen mit dem Befestigungsmittel in ein Mantelrohr aufgenommen werden müssen.

Besonders vorteilhaft ist es in diesem Zusammenhang, wenn das Befestigungselement die verformte Welle der Schlauchleitung hintergreift, wodurch ein direkter Zusammenhang zwischen Festlegung der Schlauchleitung und Dichtwirkungsverbesserung aufgrund der vorgespannten letzten Schlauchleitungswelle hergestellt wird. Das Befestigungselement kann gleichzeitig auch die Anschlußleitung bzw. einen zugehörigen Bord, Flansch oder dergleichen hintergreifen und hierdurch beide Leitungen gleichzeitig gegeneinander verspannen.

Ein wesentlicher Aspekt der vorliegenden Erfindung liegt außerdem darin, daß in die Anschlußverbindung ein die Schlauchleitung und/oder den Dichtring beaufschlagendes, gegebenenfalls mit dem Anschlußelement bzw. der Anschlußleitung verbundenes Stützelement einbezogen ist, das als Widerlager für die von der verformten Welle der Schlauchleitung und dem in der Schlauchleitung herrschenden Innendruck auf den Dichtring ausgeübte Kraft dient.

Bezüglich der Ausgestaltung des erfindungsgemäßen Stützelementes sind verschiedene vorteilhafte Varianten möglich: So wird zum einen vorgeschlagen, daß das Stützelement den Dichtring trägt, wobei dann zweckmäßigerweise sowohl die Schlauchleitung als auch die Anschlußleitung jeweils - von entgegengesetzten Richtungen her - am Dichtring anliegen; hierbei kann der Dichtring auch doppelt ausgeführt sein, also einen umlaufenden, der Schlauchleitung zugeordneten Dichtring und einen ebenfalls umlaufenden, der Anschlußleitung zugeordneten Dichtring aufweisen, wobei zwischen beiden Dichtringen das Stützelement nach außen vorragen kann, um eine geeignete Anlagefläche für die Dichtringe herzustellen.

In diesen Fällen ist das Stützelement ein umlaufend geschlossenes Bauteil und vorzugsweise auf der Schlauchinnenseite vorzusehen.

Zum anderen ist es auch möglich, daß das Stützelement die verformte Welle der Schlauchleitung hintergreift, also beispielsweise in das letzte endständige Wellental vor der verformten Welle eingreift. Hierdurch und durch das Zusammenwirken mit dem Befestigungselement wird ein Festlager für die Schlauchleitung gebildet, das zur Abstützung der verformten Welle dient, so daß diese ihre Vorspannkraft auf den Dichtring übertragen kann. In diesem Falle sitzt der Dichtring zweckmäßigerweise auf der Anschlußleitung, so daß Schlauchleitung und Anschlußleitung über denselben Dichtring abgedichtet werden.

Außerdem ist hierbei das Stützelement geteilt und auf der Schlauchaußenseite angeordnet.

Ein weiterer Vorteil der vorliegenden Erfindung kommt dann zum Tragen, wenn der Dichtring entlang großer Teile seines Querschnittes von der verformten Welle der Schlauchleitung und/oder dem Stützelement umgeben und formschlüssig gehalten ist, so daß die hierdurch erzielte Kammerung des Dichtringes dafür sorgt, daß auch solche Materialien eingesetzt werden können, die unter Umständen bei bestimmten Arbeitsbedingungen nicht so formstabil sind und ohne entsprechende Kammerung den Dichtungssitz verlassen würden.

Bezüglich des Materials des Dichtrings empfiehlt es sich, diesen als Weichstoffdichtung und insbesondere aus Gummi, Silikon-Kautschuk oder PTFE auszubilden.

Das Stützelement sollte zweckmäßigerweise zur Festlegung des Dichtringes mit einer Durchmesseränderung versehen sein und beispielsweise eine umlaufende Sicke aufweisen, in der der Dichtring fixiert wird. Ebenso kann das Stützelement profiliert ausgebildet sein und die Profilierung ungefähr an die Wellenform der Schlauchleitung angepaßt sein, wodurch das vorstehend beschriebene Hintergreifen der letzten Welle der Schlauchleitung verbessert und durch die flächige Anlage der Schlauchleitung am Stützelement die hierbei erfolgende Festlegung erhöht wird. Insbesondere wenn das Stützelement auf der Außenseite der Schlauchleitung angeordnet ist und in die Wellentäler der Schlauchleitung eingreift, sollte das Stützelement zweckmäßigerweise geteilt ausgebildet sein.

Schließlich empfiehlt sich gemäß einer alternativen Bauform auch, daß das Stützelement eine konische Innenfläche aufweist, die mit einer entsprechend konisch ausgebildeten Außenfläche eines Anschlußflansch der Anschlußleitung zusammenwirkt, daß zwischen beiden konischen Flächen die verformte letzte Welle angeordnet ist derart, daß sie der konischen Form entsprechend aufgeweitet ist und daß die verformte Welle zwischen Stützelement und Anschlußflansch verklemmt ist. In der konischen Außenfläche des Anschlußflansch ist zweckmäßigerweise eine umlaufende Aussparung zur Aufnahme des von der verformten Welle beaufschlagten und nach innen gedrückten Dichtringes vorgesehen. Die Verklemmung - besser Verkeilung - erfolgt durch das Befestigungselement, das zum einen das Stützelement und zum anderen den Anschlußflansch hintergreift und beide gegeneinander verklemmt.

Ein besonders geeigneter Anwendungsfall für derartige Anschlußverbindungen liegt darin, wenn die Schlauchleitung mit einer flachen ringförmigen Wellung versehen ist und die flache Wellung durch nachträgliches Verformen der zuvor mit einer steileren Wellung versehenen Schlauchleitung hergestellt ist. Dieses nachträgliche Verformen kann beispielsweise durch Recken der gesamten Schlauchleitung bzw. größerer Teilbereiche hiervon oder durch lokales mechanisches Aufweiten der Wellen erfolgen. Hierdurch ergibt sich der Vorteil, daß durch das Verformen eine Eigenspannung in den Schlauch induziert wird, die den durch den jeweiligen maximalen Betriebsdruck ausgeübten Kräften entgegenwirkt und diese somit zumindest teilweise kompensiert. Das heißt, die durch das Verformen erzeugte Vorspannung bewirkt, daß der Schlauch sich einer weiteren Längung wie sie durch das Wirken des Betriebsdruckes zu erwarten wäre in hohem Maße widersetzt.

In diesem Zusammenhang ist es darüber hinaus empfehlenswert, wenn die Schlauchleitung mit in Teilbereichen geradlinig verlaufenden Wellenflanken versehen ist, und wenn die Wellenflanken einen Flankenwinkel gegenüber der Senkrechten zur Schlauchachse von etwa im Bereich zwischen 20° und 50° aufweisen.

Eine weitere verdeutlichte Darstellung der vorliegenden Erfindung ergibt sich aus der nachfolgenden Beschreibung von Ausführungsbeispielen anhand der Zeichnungen; hierbei zeigen
- die Figuren 1 bis 5: jeweils verschiedene Ausführungsformen erfindungsgemäßer Anschlußverbindungen in geschnittener Seitenansicht;
- Figur 6: ein Ausführungsbeispiel eines mit der vorliegenden Anschlußverbindung verwendbaren Befestigungselementes;
- Figur 7: eine für die erfindungsgemäße Anschlußverbindung geeignete Fernwärmeleitung; und
- Figur 8: die gewellte Schlauchleitung der Fernwärmeleitung in teilweise geschnittener Seitenansicht zur Verdeutlichung des besonderen Flankenwinkels.

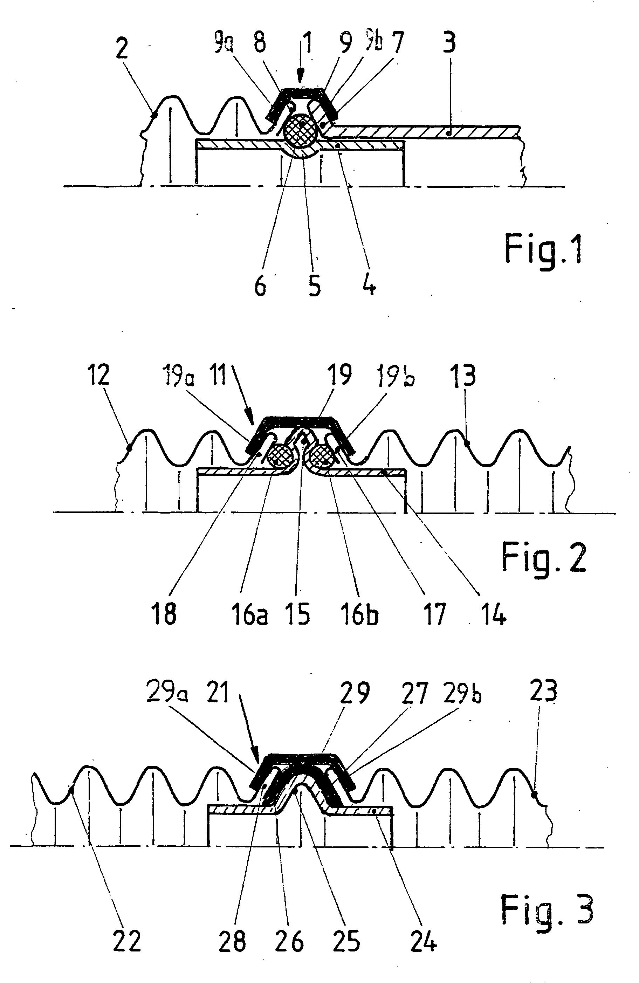

In Figur 1 ist eine erfindungsgemäße Anschlußverbindung 1 dargestellt, durch die eine ringgewellte Schlauchleitung 2 und eine rohrförmige Anschlußleitung 3 miteinander verbunden sind. Hierzu sind die beiden Leitungen jeweils mit dem aufeinander zugewandten Ende auf ein ringförmiges Stützelement 4 aufgesteckt, welches ungefähr in der Hälfte seiner Axialerstreckung eine Sicke 5 aufweist, in der ein Dichtring 6 angeordnet und gehalten ist. Beide Leitungen werden soweit aufeinander zu bewegt, bis sie in Anlage an den Dichtring gelangen, wobei sie zur Verbesserung der Dichtwirkung jeweils endständige Verformungen aufweisen, nämlich die Anschlußleitung 3 einen sich konisch aufweitenden Anschlußbord 7 und die Schlauchleitung 2 eine verformte endständige Welle 8, deren ungefähr sinusförmige Wellung im Bereich des letzten Wellenberges derart umgebogen ist, daß die beiden Flanken des Wellenberges einen fast parallelen Verlauf aufweisen.

Durch diese Verformung der letzten Wellung 8 drückt die Schlauchleitung elastisch gegen den Dichtring 6, wodurch die Dichtwirkung nicht nur auf der Seite der Schlauchleitung sondern, auch auf der gegenüberliegenden Seite der Anschlußleitung verbessert wird.

Schließlich weist die Anschlußverbindung 1 noch ein Befestigungselement 9 auf, das aus einer V-förmigen Schelle besteht, deren beide schräg nach innen geneigten Randbereiche 9a und 9b das Verspannen der Schlauchleitung und der Anschlußleitung gegen den Dichtring und somit gegen das Stützelement 4 bewirken und aufrecht erhalten.

Die als Befestigungselement fungierende V-Schelle 9 hat den wesentlichen Vorteil, daß sie keinen viel größeren Durchmesser als die Schlauchleitung selbst besitzt und somit problemlos selbst dort eingebaut werden kann, wo die Schlauchleitung selbst in einem Mantelrohr angeordnet ist, wie es beispielsweise bei Fernwärmeleitungen der Fall ist.

In Figur 2 ist eine ähnliche Bauform einer Anschlußverbindung wie in Figur 1 dargestellt, wobei die Anschlußverbindung 11 eine Schlauchleitung 12 mit einer weiteren Schlauchleitung 13 verbindet und beide Schlauchleitungen über eine als Befestigungselement fungierende V-förmige Schelle 19 gegeneinander gedrückt werden, wobei die Schelle 19 der Schelle 9 aus Figur 1 entspricht. Zwischen den beiden Schlauchleitungen 12 und 13 erstreckt sich nicht nur ein Dichtring, vielmehr ist ein Stützelement 14 vorgesehen, das mit einer Querschnittsvergrößerung 15 versehen ist, die in ungefähr gleichem Maße gegenüber den beiden rohrförmigen Endstücken des Stützelementes 14, auf die die endständigen Schlauchleitungen aufgeschoben sind, vorsteht, wie die Wellenberge gegenüber den Wellentälern der beiden Schlauchleitungen, also die Profilhöhe der jeweiligen Wellungen.

Beide Schlauchleitungen 12, 13 besitzen eine letzte Welle 17, 18, die in gleicher Weise wie die Welle 8 aus Figur 1 verformt ist. Außerdem ist jeder Schlauchleitung ein eigener Dichtring 16a, 16b zugeordnet. Die Querschnittsvergrößerung 15 des Stützelementes 14 weist eine ungefähr Ω-förmige Struktur auf, wobei die beiden Dichtringe 16a, 16b in den unteren nahezu runden Übergangsbereichen zwischen den zylindrischen Endstücken des Stützelementes und der Querschnittserweiterung angeordnet sind. Hierdurch sind die Dichtringe entlang großer Teile ihres Umfanges von der Schlauchleitung bzw. dem Stützelement umgeben und somit insbesondere gegenüber dem durch die Schlauchleitung transportierten Medium abgeschottet. Hierdurch lassen sich für die Dichtringe auch solche Materialien verwenden, die ansonsten bei einer nicht formschlüssigen Fixierung zu einer Verformung und somit zum Auswandern aus dem Dichtungssitz tendieren würden.

Das Befestigungselement 19 drückt über die beiden Randbereiche 19a und 19b die beiden letzten Wellen 17, 18 aufeinander zu, wobei die Vorspannungen für ein Andrücken der Wellen an die Dichtringe 16a, 16b und deren Anpressen gegen das Stützelement 14 sorgen.

In Figur 3 ist wiederum eine Anschlußverbindung 21 dargestellt, die in etwa derjenigen aus Figur 2 entspricht, wobei jedoch das Stützelement 24 nicht eine Ω-förmige Querschnittserweiterung 15, sondern eine dachförmige Querschnittserweiterung 25 aufweist. Außerdem sind die beiden Dichtringe 16a und 16b aus Figur 2 im vorliegenden Fall durch einen Dichtring 26 ersetzt, der in seinem Querschnitt der Dachform der Querschnittserweiterung 25 folgt. Hierdurch wird sichergestellt, daß die letzten Wellungen 27, 28 mit großflächigen Flankenbereichen an dem Dichtring 26 anliegen.

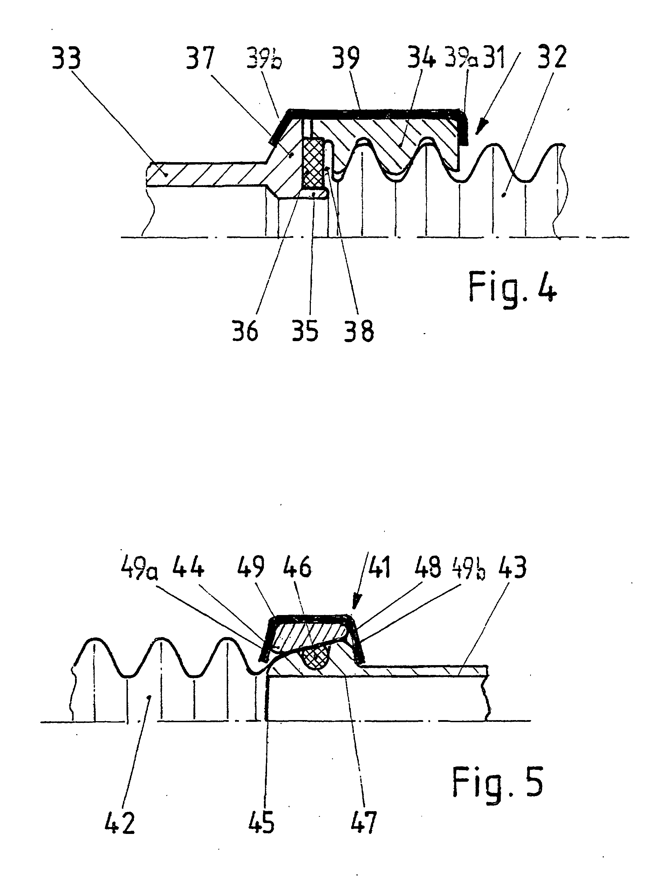

In Figur 4 ist eine gänzlich andere Anschlußvorrichtung 31 dargestellt, bei der eine Schlauchleitung 32 mit einer Anschlußleitung 33 verbunden wird und die Schlauchleitung im Bereich ihrer letzten beiden Wellungen von einem Stützelement 34 auf ihrer Außenseite beaufschlagt wird, wobei das Stützelement 34 an den Wellenverlauf der Schlauchleitung angepaßt ist und insbesondere an die gemäß den vorstehenden Beispielen verformten letzten Welle 38.

Diese letzte Welle 38 liegt mit ihrem freien Ende an einem Dichtring 36 an, der im übrigen nach außen von dem Stützelement 34 gehalten wird und auf der der Schlauchleitung 32 abgewandten Seite an der Anschlußleitung 33 anliegt sowie auf einem axial in Richtung der Schlauchleitung vorstehenden Bund 32 der Anschlußleitung 33.

Während in den Ausführungsbeispielen aus den Figuren 1 bis 3 das Befestigungselement jeweils die Schlauchleitung und die Anschlußleitung direkt beaufschlagt haben, ist im Fall der Anschlußverbindung 31 ein Befestigungselement 39 vorgesehen, das auf der Seite der Schlauchleitung 32 über einen Randbereich 39a das die Schlauchleitung umgebende Stützelement 34 und auf der Seite der Anschlußleitung über einen Randbereich 39b einen radial vorstehenden Bord 37 der Anschlußleitung 33 umgreift.

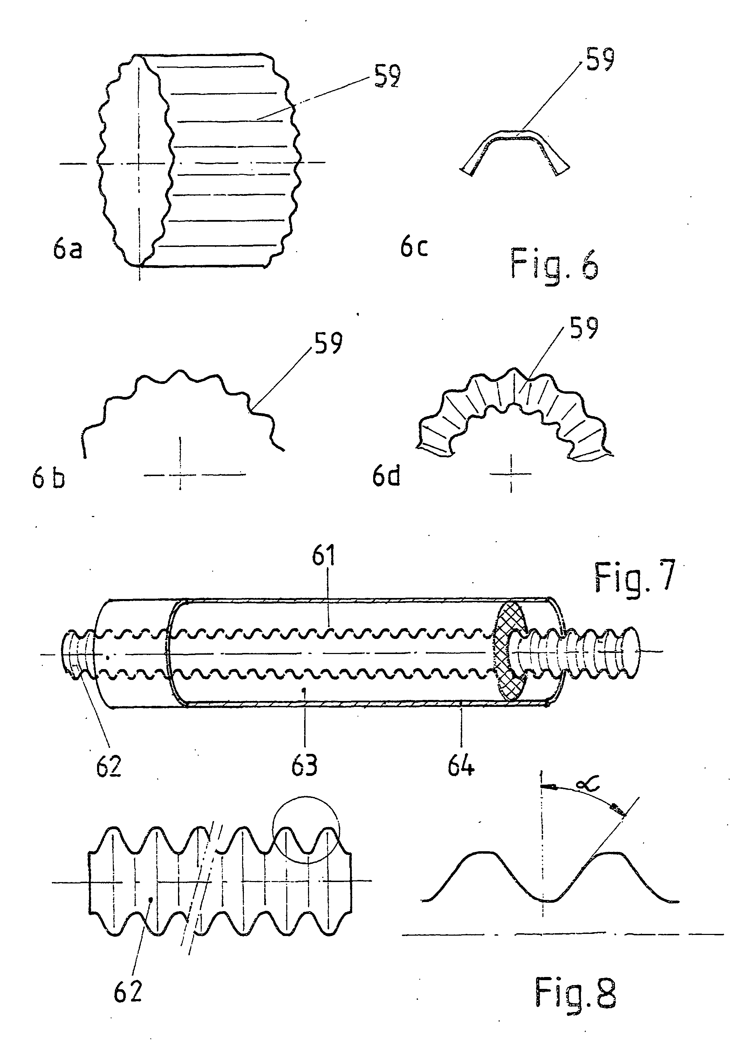

Figur 5 stellt eine Anschlußverbindung 41 im Axialschnitt dar, wobei eine Schlauchleitung 42 an eine Anschlußleitung 43 angeschlossen ist.

Die letzte Welle 48 der Schlauchleitung 42 ist im hier vorliegenden Fall zunächst etwas aufgeweitet und dann axial auf die Schlauchleitung zugestaucht und drückt hierdurch in einem konisch ausgebildeten Endabschnitt gegen einen auf der Innenseite der Wellung angeordneten Dichtring 46 und liegt in Teilbereichen auf einem entsprechend konisch ausgebildeten Anschlußflansch 47 der Anschlußleitung 43 auf der in einer Aussparung 45 den Dichtring 46 trägt.

Auf der Außenseite der letzten Welle 48 ist ein Stützelement 44 mit zylindrischer Außenfläche und konischer Innenfläche vorgesehen, wobei die konische Innenfläche eine an die konische Außenfläche des Anschlußflansches angepaßte Neigung aufweist und zur Verkeilung mit diesem Anschlußflansch dient. Hierzu wird zum einen das Stützelement 44 auf der der Schlauchleitung zugewandten Seite und zum anderen der Anschlußflansch auf der der Anschlußleitung zugewandten Seite von den Randbereichen 49a und 49b einer V-förmigen Schelle 49 beaufschlagt und beide Elemente gegeneinander verspannt, wobei gleichzeitig die letzte Welle gegen den Dichtring gedrückt wird.

Allen Anschlußverbindungen 1, 11, 21, 31, 41 ist vorteilhafterweise gemeinsam, daß sie immer unter Innendruck durch das durch die Schlauchleitung transportierte Medium stehen und aufgrund ihrer besonderen Anordnung dieser Innendruck die Dichtwirkung sogar noch erhöht.

Figur 6a zeigt ein Befestigungselement 59, das den V-förmigen Schellen aus den Figuren 1 bis 5 entspricht in perspektivischer Seitenansicht und Figur 6b zeigt dieses Befestigungselement in Vorderansicht. Hierbei ist zu erkennen, daß das Befestigungselement mit einer leichten Profilierung versehen ist, durch die die Formsteifigikeit etwas erhöht ist. Hierdurch ergibt sich der Vorteil, daß das Befestigungselement 59 zwar etwas schwerer an den seitlichen Randbereichen 59a und 59b nach innen gebogen werden muß zur Erzielung der die Schlauch- und die Anschlußleitung gegeneinander festlegenden V-Form, wie sie in Figur 6c in Seitenansicht dargestellt ist, jedoch wird hierbei gleichzeitig sichergestellt, daß die Schelle die einmal eingenommene und die Anschlußverbindung aufrechterhaltende V-Form beibehält. Figur 6d zeigt schließlich ausschnittsweise das verformte V-förmige Befestigungselement in Vorderansicht.

Figur 7 zeigt ein Ausführungsbeispiel, bei dem sich die erfindungsgemäßen Anschlußverbindungen vorteilhaft einsetzen lassen, nämlich eine Verbundleitung 61, die aus einer ringgewellten inneren Schlauchleitung 62 aus Metall besteht, einer diese Schlauchleitung umgebenden Isolierschicht 63 aus PUR-Schaum sowie aus einem auf der Außenseite der Isolierschicht koaxial zur inneren Schlauchleitung angeordneten Mantelrohr 64 aus Kunststoff.

Die innere ringgewellte Schlauchleitung 62 weist die sich insbesondere aus Figur 8 ergebende Besonderheit auf, daß sie weitgewellt ausgeführt ist und mit geradlinig verlaufenden Flanken versehen ist, die einen Winkel von etwa zwischen 20° und 50° zur Senkrechten zur Schlauchachse einnehmen.

Derartige flache Flankenwinkel lassen sich zwar direkt durch eine entsprechende Wellung erzielen; der besondere Vorteil der inneren Schlauchleitung 62 kommt aber insbesondere dadurch zum Tragen, daß die flache Wellung durch nachträgliches Verformen, insbesondere durch Recken des Innenschlauches hergestellt ist, wobei in den Innenschlauch eine Vorspannung induziert wird, die dem Betriebsdruck des durch den Innenschlauch hindurchgeführten Mediums entgegenwirkt und diesen zumindest teilweise kompensiert.

Die vorliegenden Anschlußverbindungen lassen sich in geeigneter Weise bei der Verbundleitung 61 einsetzen, da zum einen die flache Wellung der inneren Schlauchleitungen 62 eine Verformung der endständigen Welle ermöglicht und zum anderen die vorgeschlagene Anschlußverbindungen allesamt sehr geringen Platz beanspruchen und problemlos in dem zwischen Mantelrohr 64 und innerer Schlauchleitung 62 verbleibenden Bereich angeordnet werden können.

Zusammenfassend bietet die vorliegende Erfindung den Vorteil, daß eine dauerhafte, eigenverstärkende Abdichtung im Übergangsbereich zwischen Schlauchleitung und Anschlußleitung vorgesehen wird, die noch dazu mit einfachen Mitteln herstellbar ist und nur minimalen Bauraum erfordert.

## Patentansprüche

1. Anschlußverbindung für ringgewellte Schlauchleitungen mit einem in einem endständigen Bereich der Schlauchleitung angeordneten Dichtring und einem die Schlauchleitung im Bereich des Dichtringes zumindest mittelbar umgreifenden und diesen zumindest mittelbar gegen ein Anschlußelement festlegenden Befestigungselement,
**dadurch gekennzeichnet,**
**daß** die zumindest letzte Welle (8, 18, 28, 38, 48) der Schlauchleitung (2, 12, 22, 32, 42) derart elastisch verformt ist, daß sie eine glatte Dichtfläche bildet und unter eigener Vorspannung am Dichtring anliegt, daß das Befestigungselement (9, 19, 29, 39, 49, 59) als einstückige und geschlossene ringförmige Schelle mit im wesentlichen über den Umfang gleichbleibendem Außendurchmesser ausgebildet ist, und daß die Schelle zumindest einen umlaufenden Randbereich (9a, 9b, 19a, 19b, 29a, 29b, 39a, 39b, 49a, 49b, 59a, 59b) aufweist, der zur Herstellung der Anschlußverbindung in Radialrichtung derart nach innen biegbar ist, so daß die Schelle über den Randbereich die Schlauchleitung und/oder das Anschlußelement zumindest mittelbar formschlüssig umgreift.

2. Anschlußverbindung nach zumindest Anspruch 1,
**dadurch gekennzeichnet,**
**daß** die Schelle (9, 19, 29, 39, 49, 59) die Schlauchleitung (2, 12, 22, 32, 42) und/oder das Anschlußelement (3, 13, 23, 33, 43) entlang des gesamten Umfanges zumindest mittelbar gleichmäßig beaufschlagt.

3. Anschlußverbindung nach zumindest einem der vorstehenden Ansprüche,
**dadurch gekennzeichnet,**
**daß** der Außendurchmesser der Schelle (9, 19, 29, 39, 49, 59) während der Herstellung der Anschlußverbindung im wesentlichen unverändert bleibt.

4. Anschlußverbindung nach zumindest einem der vorstehenden Ansprüche,
**dadurch gekennzeichnet,**
**daß** die Schelle (9, 19, 29, 39, 49, 59) einen im wesentlichen etwa U- bzw. V-förmigem Querschnitt aufweist mit einer insbesondere etwa zylindrischen Basis und zwei jeweils einen U- bzw. V-Schenkel bildenden Randbereichen, wobei die Schelle über einen (9a, 19a, 29a, 39a, 49a) der beiden Randbereiche die Schlauchleitung und insbesondere deren verformte Welle (8, 18, 28) und über den anderen Randbereich (9b, 19b, 29b, 39b, 49b) das Anschlußelement zumindest mittelbar formschlüssig umgreift.

5. Anschlußverbindung nach zumindest einem der vorstehenden Ansprüche,
**dadurch gekennzeichnet,**
**daß** der Randbereich mit einer Profilierung und/oder Aussparungen versehen ist, und daß der Randbereich über die Profilierung bzw. Aussparungen zumindest in Teilbereichen radial nach innen in Richtung der Mittelachse biegbar ist.

6. Anschlußverbindung nach zumindest einem der vorstehenden Ansprüche,
**dadurch gekennzeichnet,**
**daß** in die Anschlußverbindung (1, 11, 21, 31, 41) ein die Schlauchleitung (2, 12, 22, 32, 42) und/oder den Dichtring (6, 16a, 16b, 26, 36, 46) beaufschlagendes, gegebenenfalls mit dem Anschlußelement (3, 13, 23, 33, 43) verbundenes Stützelement (4, 14, 24, 34, 44) einbezogen ist, und daß das Stützelement (4, 14, 24, 34, 44) als Widerlager für die von der verformten Welle (8, 18, 28, 38, 48) der Schlauchleitung (2, 12, 22, 32, 42) und dem Innendruck auf den Dichtring (6, 16a, 16b, 26, 36, 46) ausgeübte Kraft dient.

7. Anschlußverbindung nach zumindest Anspruch 6,
**dadurch gekennzeichnet,**
**daß** das Stützelement (4, 14, 24) auf der Schlauchinnenseite angeordnet ist und den Dichtring (6, 16a, 16b, 26) insbesondere im Bereich einer am Stützelement vorgesehenen Durchmesseränderung (5, 15, 25) oder Sicke (5) trägt.

8. Anschlußverbindung nach zumindest Anspruch 6,
**dadurch gekennzeichnet,**
**daß** das Stützelement (34) geteilt ausgebildet und insbesondere auf der Schlauchaußenseite angeordnet ist.

9. Anschlußverbindung nach zumindest einem der vorstehenden Ansprüche 6 bis 8,
**dadurch gekennzeichnet,**
**daß** das Stützelement (34) profiliert ausgebildet ist, daß die Profilierung ungefähr der Wellenform der Schlauchleitung (32) angepaßt ist, und daß das Stützelement (34) insbesondere die verformte Welle (38) der Schlauchleitung (32) hintergreift.

10. Anschlußverbindung nach zumindest einem der vorstehenden Ansprüche 6 bis 9,
**dadurch gekennzeichnet,**
**daß** der Dichtring (6, 16a, 16b, 26, 36, 46) von der verformten Welle (8, 18, 28, 38, 48) der Schlauchleitung (2, 12, 22, 32, 42) und/oder dem Stützelement (4, 14, 24, 34, 44) gekammert ist derart, daß er entlang großer Teile seines Querschnittes von diesen umgeben und formschlüssig gehalten ist.

11. Anschlußverbindung nach zumindest einem der vorstehenden Ansprüche,
**dadurch gekennzeichnet,**
**daß** der Dichtring als Weichstoffdichtung ausgebildet ist und insbesondere aus Gummi, Silikon-Kautschuk oder PTFE besteht.

12. Anschlußverbindung nach zumindest Anspruch 6,
**dadurch gekennzeichnet,**
**daß** das Stützelement (44) eine konische Innenfläche aufweist, die mit einer entsprechend konisch ausgebildeten Außenfläche des Anschlußflansch (47) des Anschlußelementes (43) zusammenwirkt, und daß zwischen beiden konischen Flächen die verformte letzte Welle (48) angeordnet ist derart, daß sie der konischen Form entsprechend aufgeweitet und zwischen Stützelement und Anschlußflansch verklemmt ist.

13. Anschlußverbindung nach zumindest einem der vorstehenden Ansprüche,
**dadurch gekennzeichnet,**
**daß** die Schlauchleitung (62) mit einer flachen ringförmigen Wellung versehen ist, und daß die flache Wellung durch nachträgliches Verformen der zuvor mit einer steileren Wellung versehenen Schlauchleitung hergestellt ist.

14. Anschlußverbindung nach zumindest einem der vorstehenden Ansprüche,
**dadurch gekennzeichnet,**
**daß** die Schlauchleitung (62) mit in Teilbereichen geradlinig verlaufenden Wellenflanken versehen ist, und daß die Wellenflanken einen Flankenwinkel von etwa im Bereich zwischen 20° und 50° aufweisen.

## Claims

1. Joint for annularly corrugated flexible tubes having a sealing ring arranged in a terminal region of the flexible tube and having a fastening element that engages at least indirectly around the flexible tube in the region of the sealing ring and fixes the latter at least indirectly against an extension element,
**characterised in that**
at least the last corrugation (8, 18, 28, 38, 48) of the flexible tube (2, 12, 22, 32, 42) is resiliently deformed in such a manner that it forms a smooth sealing surface and rests, under its own bias, against the sealing ring; the fastening element (9, 19, 29, 39, 49, 59) is in the form of a one-piece closed annular clip, the outer diameter of which is substantially constant over the circumference, and the clip has at least one circumferential edge region (9a, 9b, 19a, 19b, 29a, 29b, 39a, 39b, 49a, 49b, 59a, 59b) which, to form the joint, can be bent radially inwards in such a manner that, by way of the edge region, the clip at least indirectly engages interlockingly around the flexible tube and/or the extension element.

2. Joint according to at least claim 1,
**characterised in that**
the clip (9, 19, 29, 39, 49, 59) acts, at least indirectly, uniformly on the flexible tube (2, 12, 22, 32, 42) and/or the extension element (3, 13, 23, 33, 43) along the entire circumference.

3. Joint according to at least one of the preceding claims,
**characterised in that**
the outer diameter of the clip (9, 19, 29, 39, 49, 59) remains substantially unchanged while the joint is being made.

4. Joint according to at least one of the preceding claims,
**characterised in that**
the clip (9, 19, 29, 39, 49, 59) has a substantially approximately U-shaped or V-shaped cross-section with an especially approximately cylindrical base and two edge regions each forming the arm of a U or V, the clip at least indirectly engaging interlockingly, by way of one (9a, 19a, 29a, 39a, 49a) of the two edge regions, around the flexible tube and especially its deformed corrugation (8, 18, 28) and, by way of the other edge region (9b, 19b, 29b, 39b, 49b), around the extension element.

5. Joint according to at least one of the preceding claims,
**characterised in that**
the edge region is provided with contouring and/or recesses, and the edge region, by way of the contouring or recesses, can at least in portions be bent radially inwards in the direction of the central axis.

6. Joint according to at least one of the preceding claims,
**characterised in that**
there is integrated into the joint (1, 11, 21, 31, 41) a support element (4, 14, 24, 34, 44), which acts upon the flexible tube (2, 12, 22, 32, 42) and/or the sealing ring (6, 16a, 16b, 26, 36, 46) and which is optionally connected to the extension element (3, 13, 23, 33, 43), and the support element (4, 14, 24, 34, 44) serves as a bearing for the force exerted on the sealing ring (6, 16a, 16b, 26, 36, 46) by the deformed corrugation (8, 18, 28, 38, 48) of the flexible tube (2, 12, 22, 32, 42) and by the internal pressure.

7. Joint according to at least claim 6,
**characterised in that**
the support element (4, 14, 24) is arranged on the inner side of the flexible tube and carries the sealing ring (6, 16a, 16b, 26) especially in the region of a change in diameter (5, 15, 25) or bead (5) provided on the support element.

8. Joint according to at least claim 6,
**characterised in that**
the support element (34) is divided and is arranged especially on the outer side of the flexible tube.

9. Joint according to at least one of preceding claims 6 to 8,
**characterised in that**
the support element (34) is contoured; the contours are matched approximately to the corrugated shape of the flexible tube (32), and the support element (34) especially engages behind the deformed corrugation (38) of the flexible tube (32).

10. Joint according to at least one of preceding claims 6 to 9,
**characterised in that**
the sealing ring (6, 16a, 16b, 26, 36, 46) is enclosed by the deformed corrugation (8, 18, 28, 38, 48) of the flexible tube (2, 12, 22, 32, 42) and/or by the support element (4, 14, 24, 34, 44) in such a manner that along large portions of its cross-section it is surrounded and held interlockingly thereby.

11. Joint according to at least one of the preceding claims,
**characterised in that**
the sealing ring is in the form of a soft material seal and consists especially of rubber, silicone rubber or PTFE.

12. Joint according to at least claim 6,
**characterised in that**
the support element (44) has a conical inner surface that co-operates with a correspondingly cone-shaped outer surface of the connection flange (47) of the extension element (43), and the deformed last corrugation (48) is arranged between the two conical surfaces in such a manner that it is expanded in accordance with the conical shape and is clamped between the support element and the connection flange.

13. Joint according to at least one of the preceding claims,
**characterised in that**
the flexible tube (62) is provided with shallow annular corrugations, and the shallow corrugations are produced by subsequent deformation of the flexible tube which has previously been provided with steeper corrugations.

14. Joint according to at least one of the preceding claims,
**characterised in that**
the flexible tube (62) is provided with corrugation flanks which, in portions, extend in a straight line, and the corrugation flanks have a flank angle approximately in the range from 20° to 50°.

## Revendications

1. Raccord pour tuyaux ondulés avec une bague d'étanchéité disposée dans une zone d'extrémité du tuyau et avec un élément de fixation entourant au moins indirectement le tuyau dans la zone de la bague d'étanchéité et fixant celui-ci au moins indirectement sur un élément de raccordement, **caractérisé en ce qu'**au moins la dernière ondulation (8, 18, 28, 38, 48) du tuyau (2, 12, 22, 32, 42) fait l'objet d'une déformation souple telle qu'elle forme une surface d'étanchéité plane et repose avec une précontrainte propre contre la bague d'étanchéité, **en ce que** l'élément de fixation (9, 19, 29, 39, 49, 59) est réalisé comme bride d'une seule pièce et fermée de forme circulaire avec un diamètre extérieur restant sensiblement constant sur son pourtour et **en ce que** la bride présente au moins une zone d'extrémité circulaire (9a, 9b, 19a, 19b, 29a, 29b, 39a, 39b, 49a, 49b, 59a, 59b) qui, pour la réalisation du raccord en direction radiale, peut être repliée de telle manière vers l'intérieur que la bride entoure, par-dessus la zone d'extrémité, au moins indirectement et en complémentarité de forme le tuyau et/ou l'élément de raccordement.

2. Raccord pour tuyaux ondulés selon au moins la revendication 1, **caractérisé en ce que** la bride (9, 19, 29, 39, 49, 59) agit de manière régulière au moins indirectement le long de l'ensemble de son pourtour sur le tuyau (2, 12, 22, 32, 42) et/ou sur l'élément de raccordement (3, 13, 23, 33, 43).

3. Raccord pour tuyaux ondulés selon au moins l'une des revendications précédentes, **caractérisé en ce que** le diamètre extérieur de la bride (9, 19, 29, 39, 49, 59) reste sensiblement sans changement lors de la réalisation du raccord.

4. Raccord pour tuyaux ondulés selon au moins l'une des revendications précédentes, **caractérisé en ce que** la bride (9, 19, 29, 39, 49, 59) présente une section sensiblement à peu près en forme de U ou de V avec une base en particulier à peu près cylindrique et deux zones marginales formant respectivement une branche d'un U ou d'un V, la bride entourant au moins indirectement en complémentarité de forme avec l'une (9a, 19a, 29a, 39a, 49a) des deux zones marginales le tuyau, et en particulier son ondulation déformée (8, 18, 28), et avec l'autre zone marginale (9b, 19b, 29b, 39b, 49b) l'élément de raccordement.

5. Raccord pour tuyaux ondulés selon au moins l'une des revendications précédentes, **caractérisé en ce que** la zone marginale est munie d'un profilage et/ou d'évidements et **en ce que** par l'intermédiaire du profilage ou des évidements la zone marginale peut être repliée au moins par zones partielles vers l'intérieur en direction de l'axe médian.

6. Raccord pour tuyaux ondulés selon au moins l'une des revendications précédentes, **caractérisé en ce qu'**un élément d'appui (4, 14, 24, 34, 44) agissant sur le tuyau (2, 12, 22, 32, 42) et/ou sur la bague d'étanchéité (6, 16a, 16b, 26, 36, 46) et éventuellement relié à l'élément de raccordement (3, 13, 23, 33, 43) est inclus dans le raccord (1, 11, 21, 31, 41) et **en ce que** l'élément d'appui (4, 14, 24, 34, 44) sert de butée pour la force exercée sur la bague d'étanchéité (6, 16a, 16b, 26, 36, 46) par l'ondulation déformée (8, 18, 28, 38, 48) du tuyau (2, 12, 22, 32, 42) et par la pression intérieure.

7. Raccord pour tuyaux ondulés selon au moins la revendication 6, **caractérisé en ce que** l'élément d'appui (4, 14, 24) est disposé sur le côté intérieur du tuyau et porte la bague d'étanchéité (6, 16a, 16b, 26), en particulier dans la zone d'une modification du diamètre (5, 15, 25) ou d'une moulure (5) prévue sur l'élément d'appui.

8. Raccord pour tuyaux ondulés selon au moins la revendication 6, **caractérisé en ce que** l'élément d'appui (34) est divisé et est disposé en particulier sur le côté extérieur du tuyau.

9. Raccord pour tuyaux ondulés selon au moins l'une des revendications précédentes 6 à 8, **caractérisé en ce que** l'élément d'appui (34) est profilé, **en ce que** le profilage est approximativement adapté à la forme de l'ondulation du tuyau (32) et **en ce que** l'élément d'appui (34) passe en particulier derrière l'ondulation déformée (38) du tuyau (32).

10. Raccord pour tuyaux ondulés selon au moins l'une des revendications précédentes 6 à 9, **caractérisé en ce que** la bague d'étanchéité (6, 16a, 16b, 26, 36, 46) est encapsulée par l'ondulation déformée (8, 18, 28, 38, 48) du tuyau (2, 12, 22, 32, 42) et/ou par l'élément d'appui (4, 14, 24, 34, 44), et ceci de telle manière qu'elle soit entourée et maintenue par ceux-ci en complémentarité de forme sur de grandes parties de sa section.

11. Raccord pour tuyaux ondulés selon au moins l'une des revendications précédentes, **caractérisé en ce que** la bague d'étanchéité est réalisée en tant que joint en matière tendre et se compose en particulier de caoutchouc, de caoutchouc de silicone ou de PTFE.

12. Raccord pour tuyaux ondulés selon au moins la revendication 6, **caractérisé en ce que** l'élément d'appui (44) possède une surface intérieure conique, qui est en interaction avec une surface extérieure avec une conicité correspondante de la bride de raccordement (47) de l'élément de raccordement (43) et **en ce que** la dernière ondulation déformée (48) est disposée entre les deux surfaces coniques, et ceci de telle façon qu'elle soit évasée en fonction de la forme conique et qu'elle soit coincée entre l'élément d'appui et la bride de raccordement.

13. Raccord pour tuyaux ondulés selon au moins l'une des revendications précédentes, **caractérisé en ce que** le tuyau (62) est muni d'une ondulation plate circulaire et **en ce que** l'ondulation plate est réalisée par une déformation ultérieure du tuyau prévu auparavant avec une ondulation avec une pente plus prononcée.

14. Raccord pour tuyaux ondulés selon au moins l'une des revendications précédentes, **caractérisé en ce que** le tuyau (62) est muni de flancs d'ondulations se déroulant en ligne droite dans des zones partielles et **en ce que** les flancs desondulations présentent un angle situé approximativement dans une plage de 20° à 50°.
